# EUROPEAN PATENT APPLICATION

(11) **EP 2 779 084 A1**
(43) Date of publication of application: **17.09.2014**
(21) Application number: 12847800.5
(22) Date of filing: 31.10.2012
(51) Int. Cl.: G06Q 50/06, H02J 3/00, H02J 7/00, H02J 7/02

(54) **CHARGING FEE CALCULATION DEVICE, CHARGING FEE CALCULATION METHOD, AND PROGRAM THEREFOR**

(30) Priority: 09.11.2011 JP 2011245685
(71) Applicant: Mitsubishi Heavy Industries, Ltd., Tokyo 108-8215 (JP)
(72) Inventor: KOYANAGI, Yoko, Tokyo 108-8215 (JP); SONODA, Takashi, Tokyo 108-8215 (JP); ONO, Hidekazu, Tokyo 108-8215 (JP); KAMINO, Yuichiro, Tokyo 108-8215 (JP); OGAWA, Hiroshi, Tokyo 108-8215 (JP); TAJIMA, Toshiyuki, Tokyo 108-8215 (JP); MORISHITA, Keiichi, Tokyo 108-8215 (JP); NISHIMAE, Etsuji, Tokyo 108-8215 (JP)
(74) Representative: Henkel, Breuer & Partner
(86) International application number: PCT/JP2012/078142
(87) International publication number: WO 2013/069518

(57) **Abstract**

A charging fee calculation device provided with: a congestion degree input unit for inputting a congestion degree of vehicles within a prescribed area at a specified time, said congestion degree being calculated in advance; an absolute power demand amount calculation unit which uses congestion degree / absolute power demand amount relationship data indicating the relationship between the congestion degree of vehicles within the prescribed area and an absolute power demand amount which is the sum total of the amount of charging necessary for the vehicles to move out of the prescribed area, as a basis to calculate from the inputted congestion degree the absolute power demand amount at the specified time, said congestion degree / absolute power demand amount relationship data being calculated in advance; a permissible power demand amount input unit for inputting a permissible power demand amount that a power generation facility can supply within the prescribed area at the specified time; a surplus power calculation unit for calculating a surplus power amount indicating the difference between the permissible power demand amount and the absolute power demand amount; and a charging fee calculation unit for calculating a charging fee on the basis of power demand amount / charging fee relationship data indicating the relationship between a power demand amount and a charging fee per unit amount of power, and the amount of surplus power that was calculated.

## Description

### TECHNICAL FIELD

The present invention relates to a charging fee calculation device, a charging fee calculation method, and its program for power with which a vehicle or the like is charged.

Priority is claimed on Japanese Patent Application No. 2011-245685, filed November 9, 2011, the content of which is incorporated herein by reference.

### BACKGROUND ART

In recent years, the practical use of electric vehicles (hereinafter referred to as EVs), which use electricity as a power source, has been advanced and their penetration rate has increased. An EV has a battery to receive the supply of power from a charging facility called a charging station. Here, as the penetration rate of EVs increases, power demand for EVs in a charging facility within a region increases. In addition, the power demand for EVs varies with time due to a vehicle congestion degree of EVs, general vehicles, etc. within the region. Thus, in a power grid within a region, various systems for managing the supply-demand balance of power have been proposed in consideration of the fact that the load increases in a time zone in which the power demand for EVs increases.

For example, a management device for preparing information defining an enjoyable reward for consumers according to charging action for EVs of the consumers or a constraint of the charging action, creating a charging plan to maximize the reward based on the information, and instructing a power facility to start charging according to the created charging plan has been proposed (for example, see Patent Literature 1). Here, for example, a charging fee itself is considered as the above-described reward. Electricity demand by consumers generally increases when the charging fee is low, and the electricity demand by the consumers decreases when the charging fee is high.

### PRIOR ART LITERATURE

### PATENT LITERATURE

[Patent Literature 1]
Japanese Unexamined Patent Application, First Publication No. 2010-81722

### DISCLOSURE OF INVENTION

### PROBLEMS TO BE SOLVED BY THE INVENTION

However, a charging fee setting method in which a proper power supply-demand balance can be maintained is not disclosed in Patent Literature 1. Thus, when the charging fee is improperly set, power demand by EVs within the region may exceed power supply capability.

Therefore, an object of the present invention is to provide a charging fee calculation device, a charging fee calculation method, and its program capable of solving the above-described problem.

### MEANS FOR SOLVING THE PROBLEMS

In order to achieve the aforementioned object, the present invention is a charging fee calculation device including: a congestion degree input unit configured to input a pre-calculated congestion degree of vehicles within a predetermined region at a specified time; an absolute power demand amount calculation unit configured to calculate an absolute power demand amount at the specified time from the input congestion degree based on pre-calculated congestion degree/absolute power demand amount relationship data representing a relationship between the congestion degree of vehicles within the predetermined region and the absolute power demand amount which is a sum of charge amounts necessary for the vehicles to move outside of the predetermined region; a permissible power demand amount input unit configured to input a permissible power demand amount in which supply by a power generation facility is possible within the predetermined region at the specified time; a surplus power calculation unit configured to calculate a surplus power amount representing a difference between the permissible power demand amount and the absolute power demand amount; and a charging fee calculation unit configured to calculate a charging fee based on power demand amount/charging fee relationship data representing a relationship between a power demand amount and a charging fee per unit amount of power and the calculated surplus power amount.

In addition, in the above-described charging fee calculation device of the present invention, the charging fee includes a first charging fee to be applied when charging is performed up to a charge amount necessary to move to the outside of the predetermined region and a second charging fee to be applied when charging exceeding the charge amount is performed, and the charging fee calculation unit sets the first charging fee to a pre-acquired value and sets the second charging fee to a value calculated based on the power demand amount/charging fee relationship data and the surplus power amount.

In addition, the above-described charging fee calculation device of the present invention includes a charging fee output unit configured to output the first charging fee and the second charging fee.

In addition, in the above-described charging fee calculation device of the present invention, the charging fee output unit distributes the first charging fee and the second charging fee using a communication network.

In addition, the above-described charging fee calculation device of the present invention includes an absolute power amount calculation unit configured to calculate an absolute power amount representing a power amount necessary to move to the outside of the predetermined region based on a distance from a position of the vehicle to the outside of the predetermined region and a traveling distance of the vehicle per unit power consumption amount.

In addition, the above-described charging fee calculation device of the present invention includes an absolute power amount calculation unit configured to calculate an absolute power amount representing a power amount necessary to move to the outside of the predetermined region based on a distance from a position of the vehicle to a charging facility closest to the outside of the predetermined region and a traveling distance of the vehicle per unit power consumption amount.

In addition, the present invention is a charging fee calculation method for use in a charging fee calculation device, the charging fee calculation method including: inputting, by a congestion degree input unit, a pre-calculated congestion degree of vehicles within a predetermined region at a specified time; calculating, by an absolute power demand amount calculation unit, an absolute power demand amount at the specified time from the input congestion degree based on pre-calculated congestion degree/absolute power demand amount relationship data representing a relationship between the congestion degree of vehicles within the predetermined region and the absolute power demand amount which is a sum of charge amounts necessary for the vehicles to move outside of the predetermined region; inputting, by a permissible power demand amount input unit, a permissible power demand amount in which supply by a power generation facility is possible within the predetermined region at the specified time; calculating, by a surplus power calculation unit, a surplus power amount representing a difference between the permissible power demand amount and the absolute power demand amount; and calculating, by a charging fee calculation unit, a charging fee based on power demand amount/charging fee relationship data representing a relationship between a power demand amount and a charging fee per unit amount of power and the calculated surplus power amount.

In addition, the present invention is a program for causing a computer of a charging fee calculation device to function as: a congestion degree input means configured to input a pre-calculated congestion degree of vehicles within a predetermined region at a specified time; an absolute power demand amount calculation means configured to calculate an absolute power demand amount at the specified time from the input congestion degree based on pre-calculated congestion degree/absolute power demand amount relationship data representing a relationship between the congestion degree of vehicles within the predetermined region and the absolute power demand amount which is a sum of charge amounts necessary for the vehicles to move outside of the predetermined region; a permissible power demand amount input means configured to input a permissible power demand amount in which supply by a power generation facility is possible within the predetermined region at the specified time; a surplus power calculation means configured to calculate a surplus power amount representing a difference between the permissible power demand amount and the absolute power demand amount; and a charging fee calculation means configured to calculate a charging fee based on power demand amount/charging fee relationship data representing a relationship between a power demand amount and a charging fee per unit amount of power and the calculated surplus power amount.

### EFFECTS OF THE INVENTION

According to the present invention, it is possible to manage smoothing of a congestion degree of vehicles for each predetermined region according to a charging fee.

### BRIEF DESCRIPTION OF THE DRAWINGS

Fig. 1 is a block diagram illustrating a configuration of a charging fee calculation device according to a first embodiment.
Fig. 2 is a diagram illustrating congestion degree/absolute power demand amount relationship data.
Fig. 3 is a diagram illustrating power demand amount/charging fee relationship data.
Fig. 4 is a diagram illustrating a processing outline of the charging fee calculation device.
Fig. 5 is a diagram illustrating a processing flow of the charging fee calculation device.
Fig. 6 is a block diagram illustrating a configuration of the charging fee calculation device according to a second embodiment.

### PREFERRED EMBODIMENTS FOR CARRYING OUT THE INVENTION

### (First embodiment)

Hereinafter, a charging fee calculation device according to the first embodiment of the present invention will be described with reference to the drawings.

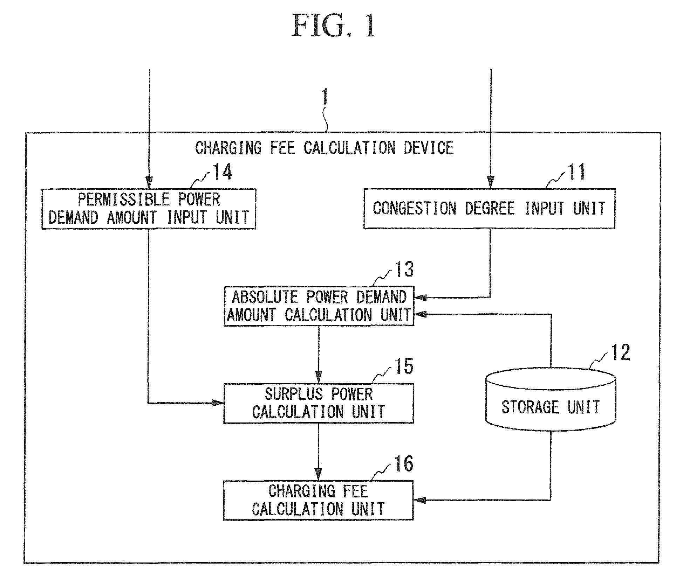

Fig. 1 is a block diagram illustrating a configuration of the charging fee calculation device according to the first embodiment.

The charging fee calculation device 1 of this embodiment illustrated in Fig. 1 is a device for outputting a charging fee so that power demand by EVs and a power supply amount from a power generation facility become a proper balance based on a congestion degree of vehicles assumed within a region and the power supply amount from the power generation facility.

The charging fee calculation device 1 includes at least processing units of a congestion degree input unit 11, an absolute power demand amount calculation unit 13, a permissible power demand amount input unit 14, a surplus power calculation unit 15, and a charging fee calculation unit 16, and a storage unit 12.

Here, the congestion degree input unit 11 is a processing unit configured to input a pre-calculated congestion degree of vehicles of a specified time within a predetermined region. The congestion degree, for example, is a value calculated according to the number of vehicles located within the predetermined region, and is a numeric value representing a degree of congestion of the vehicles within the predetermined region.

In addition, the storage unit 12 stores various types of information to be used in calculation of a charging fee. For example, the storage unit 12 stores congestion degree/absolute power demand amount relationship data. The congestion degree/absolute power demand amount relationship data represents a relationship between the congestion degree of the vehicles within the predetermined region and an absolute demand amount which is a sum of charge amounts necessary for vehicles located within the predetermined region to move outside of the predetermined region.

In addition, for example, the storage unit 12 stores power demand amount/charging fee relationship data representing the power demand amount and a charging fee per unit amount of power.

In addition, the absolute power demand amount calculation unit 13 is the processing unit configured to calculate an absolute power demand amount at the specified time from the input congestion degree based on the congestion degree/absolute power demand amount relationship data.

In addition, the permissible power demand amount input unit 14 is the processing unit configured to input a permissible power demand amount in which supply by the power generation facility is possible at the specified time within the predetermined region.

In addition, the surplus power calculation unit 15 is the processing unit configured to calculate a surplus power amount representing a difference between the input permissible power demand amount and the calculated absolute power demand amount.

In addition, the charging fee calculation unit 16 is the processing unit configured to calculate the charging fee based on the power demand amount/charging fee relationship data and the calculated surplus power amount.

The power generation facility in this embodiment generates power using renewable energy such as solar power generation or hydraulic power generation and supplies the power to the predetermined region. However, the power generation facility may further supply power generated by nuclear energy, thermal energy, or the like in addition to the renewable energy. In addition, the predetermined region may be a division region for every predetermined autonomous community such as a municipality or a prefecture or may be any other division region.

Next, data to be stored by the storage unit will be described.

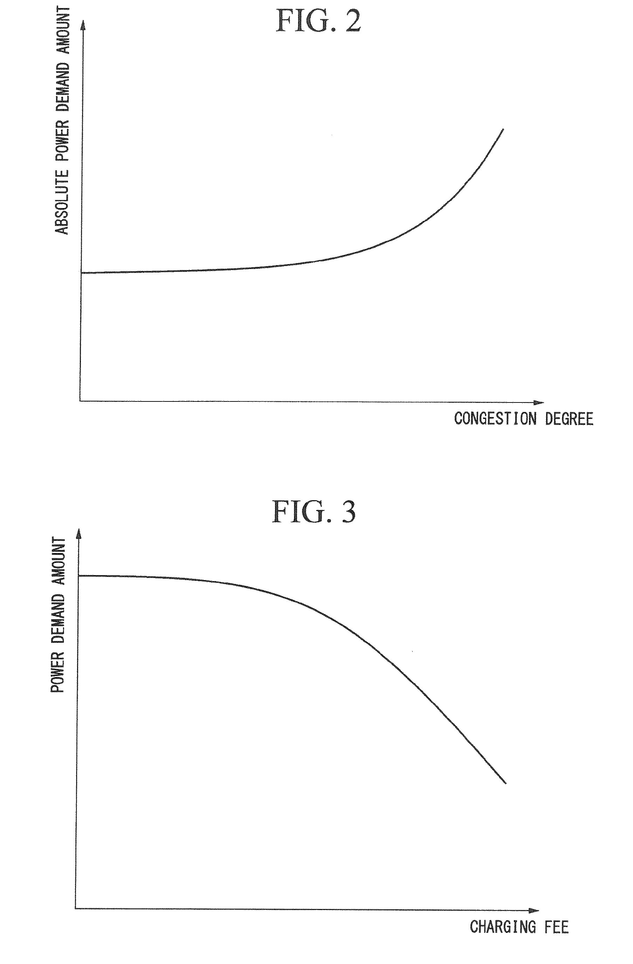

Fig. 2 is a diagram illustrating the congestion degree/absolute power demand amount relationship data.

As illustrated in this drawing, the congestion degree/absolute power demand amount relationship data represents a relationship between a current or future congestion degree of vehicles within the predetermined region and an absolute power demand amount. The absolute power demand amount is a sum of charge amounts necessary for the vehicles located within the predetermined region to move to the outside of the predetermined region. When the congestion degree within the predetermined region increases, the charge amount necessary for one vehicle to move to the outside of the predetermined region increases according to a decrease in an average speed or an increase in speed irregularity due to congestion. Accordingly, the congestion degree/absolute power demand amount relationship data represents that the absolute power demand amount, which is the sum of charge amounts necessary for the vehicles to move to the outside of the predetermined region, is also increased when the congestion degree is increased.

The congestion degree/absolute power demand amount relationship data of each predetermined region calculated by a simulator such as a congestion degree/absolute power demand amount relationship data generation device is recorded on the storage unit 12.

Here, the congestion degree/absolute power demand amount relationship data illustrated in FIG. 2 is calculated by the congestion degree/absolute power demand amount relationship data generation device performing a traffic flow simulation process or an EV power consumption/charging action simulation process. These simulation processes are performed using the remaining charge amount and position of the vehicle, a movement distance X from the position to the outside of the predetermined region, a traveling distance Y per unit power consumption amount of the vehicle, etc. More specifically, the congestion degree/absolute power demand amount relationship data generation device calculates the absolute power amount representing a power amount necessary for the vehicle to move to the outside of the predetermined region according to "movement distance X to outside of predetermined region ÷ traveling distance Y per unit power consumption amount of vehicle." Also, a power amount necessary for the vehicle to move to the charging facility outside the predetermined region may be defined as the absolute power amount according to "movement distance Z up to charging facility closest to outside of predetermined region ÷ traveling distance Y per unit power consumption amount of vehicle." Then, the congestion degree/absolute power demand amount relationship data generation device calculates a sum of values when "absolute power amount - remaining charge amount of vehicle" > 0 calculated for vehicles within the predetermined region as the absolute power demand amount necessary for the vehicles within the predetermined region to move to the outside of the predetermined region. The congestion degree/absolute power demand amount relationship data generation device performs the simulation process on this absolute power demand amount according to the congestion degree and generates the congestion degree/absolute power demand amount relationship data.

The charging fee calculation device 1 may be configured to have a function of the congestion degree/absolute power demand amount relationship data generation device. In this case, the charging fee calculation device 1 includes an absolute power amount calculation unit, and the absolute power amount calculation unit calculates the above-described absolute power amount. In addition, a congestion degree/absolute power demand amount relationship data generation unit generates the congestion degree/absolute power demand amount relationship data according to the simulation process.

Fig. 3 is a diagram illustrating the power demand amount/charging fee relationship data.

As illustrated in this drawing, the power demand amount/charging fee relationship data represents a relationship between the power demand amount (surplus power demand amount) and a charging fee per unit amount of power. The relationship represents that the charging fee per unit amount of power is low when the power demand amount is large and the charging fee per unit amount of power is high when the power demand amount is small. The power demand amount/charging fee relationship data, for example, is data calculated based on a previous record, a questionnaire survey, etc. The power demand amount/charging fee relationship data may be calculated by a simulator such as a power demand amount/charging fee relationship data generation device, and may be information input by the charging fee calculation device 1 and recorded on the storage unit 12.

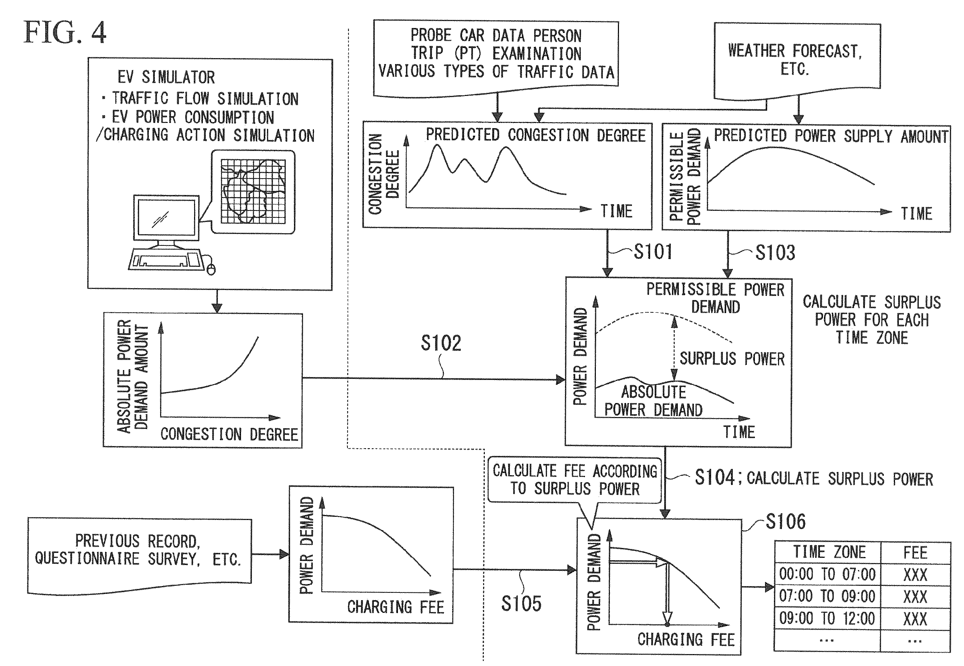

Fig. 4 is a diagram illustrating a processing outline of the charging fee calculation device.

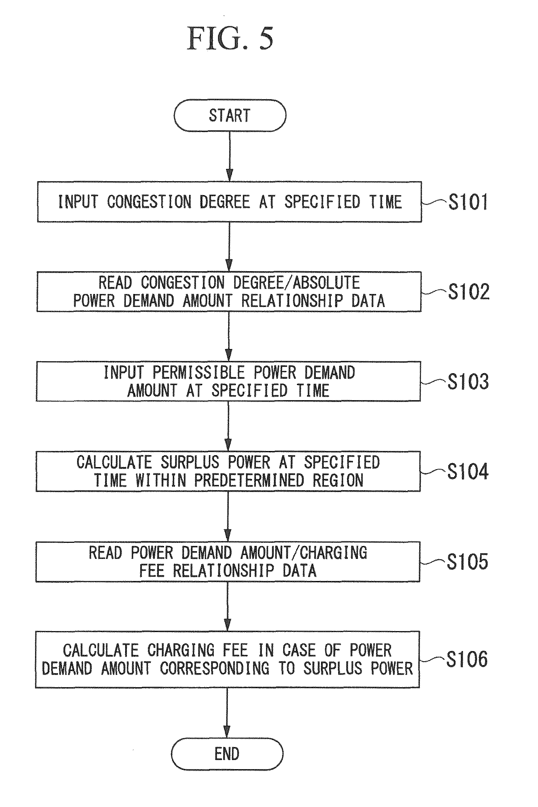

Fig. 5 is a diagram illustrating a processing flow of the charging fee calculation device.

Next, the processing flow of the charging fee calculation device will be described in order.

In the charging fee calculation device 1, first, the congestion degree input unit 11 inputs a congestion degree at a specified time (step S101). The congestion degree, for example, may be a value calculated by the simulator based on newly or previously obtained data according to a traffic volume survey, and may be represented by either of a ratio of a current traffic volume (the number of vehicles) to a saturated traffic volume and the number of vehicles of a current actual traffic volume. Alternatively, the congestion degree may be other information representing a degree of congestion. When the congestion degree is input at the specified time, the congestion degree input unit 11 outputs the input congestion degree to the absolute power demand amount calculation unit 13.

Next, the absolute power demand amount calculation unit 13 reads the congestion degree/absolute power demand amount relationship data from the storage unit 12 (step S102). Then, the absolute power demand amount corresponding to the congestion degree input from the congestion degree input unit 11 is calculated based on the congestion degree/absolute power demand amount relationship data. Specifically, when the absolute power demand amount corresponding to a value of the congestion degree of each certain interval is held, the congestion degree/absolute power demand amount relationship data is calculated by interpolation calculation or the like. In addition, the absolute power demand amount calculation unit 13 outputs the calculated absolute power demand amount to the surplus power calculation unit 15.

On the other hand, the permissible power demand amount input unit 14 inputs a permissible power demand amount at the specified time (step S103). The permissible power demand amount is information calculated by simulation of a weather forecast or the like. For example, a current or future permissible power demand amount is calculated by a power plant having a power generation station or a meteorological agency. The permissible power demand amount is distributed from a distribution server or the like configured to distribute its information and input by the permissible power demand amount input unit 14 via a communication network. Alternatively, a processing unit configured to calculate the future permissible power demand amount according to time based on various types of information such as acquired weather forecast data may be provided within the charging fee calculation device 1. The permissible power demand amount input unit 14 outputs the permissible power demand amount at the input specified time to the surplus power calculation unit 15.

Next, the surplus power calculation unit 15 calculates surplus power of the specified time within the predetermined region using the absolute power demand amount input from the absolute power demand amount calculation unit 13 and the permissible power demand amount input from the permissible power demand amount input unit 14 (step S104). Specifically, the surplus power is calculated by "permissible power demand amount - absolute power demand amount." Then, the surplus power calculation unit 15 outputs the calculated surplus power to the charging fee calculation unit 16.

Next, the charging fee calculation unit 16 reads the power demand amount/charging fee relationship data from the storage unit 12 (step S105). Then, the charging fee calculation unit 16 calculates the charging fee in the case of the power demand amount corresponding to the surplus power input from the surplus power calculation unit 15 based on the power demand amount/charging fee relationship data (step S106).

According to the above process, the charging fee of the case of the power amount corresponding to the surplus power amount according to the congestion degree within the predetermined region is set based on the relationship between the power demand and the charging fee according to the congestion degree calculated based on the simulation. Thereby, it is possible to adjust the power demand using the charging fee, and for example, it is possible to prevent excessive demand due to a significantly low charging fee.

### (Second embodiment)

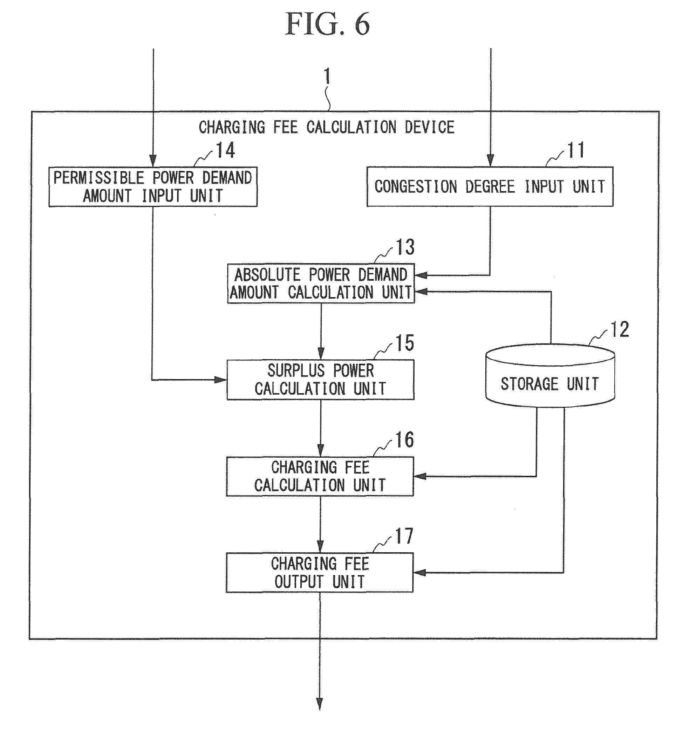

Fig. 6 is a block diagram illustrating a configuration of the charging fee calculation device according to the second embodiment.

In the drawing, the configuration of the charging fee calculation device 1 is obtained by adding the configuration of the charging fee output unit 17 to the configuration of the charging fee calculation device 1 illustrated in Fig. 1.

In the charging fee calculation device I according to the second embodiment, the charging fee output unit 17 outputs information of the charging fee calculated by the charging fee calculation unit 16 to the vehicle or the charging facility. For example, the charging fee calculation device 1 is connected to the vehicle or the charging facility via a wireless or wired communication network or the like.

Then, the information of the charging fee output from the charging fee output unit 17 is input to the vehicle or the charging facility and displayed on a display unit provided in the vehicle or the charging facility.

Here, the charging fee calculation device 1 may be configured to calculate charging fees at a plurality of different future times and output (distribute) the calculated charging fees to the vehicle or the charging facility. In this case, the vehicle or charging facility displays the charging fees for the plurality of different future times on the display unit. When the charging fees for the plurality of future times have been calculated as described above, a frequency at which the vehicle is used is considered to be increased in a time zone in which the charging fee is low as shown in a list of charging fees. Thereby, it is possible to manage the reduction of variation of a congestion degree according to time based on the charging fee.

Alternatively, the charging fee calculation device 1 may be configured to calculate charging fees of future time zones using charging fees for specified times included in the time zones and output the calculated charging fees to the vehicle or an induced electricity facility. For example, an average value of charging fees included in the future time zone is output as the charging fee of the time zone.

In addition, the charging fee calculation device 1 may be configured to calculate charging fees for each of a plurality of regions and the charging fee output unit 17 may be configured to output the charging fees of the plurality of regions to the vehicle or the charging facility. According to this process, the charging fee fluctuates according to the congestion degree of the vehicles in a predetermined region and the charging fee is calculated to be lower for a region of a lower congestion region. Accordingly, it is possible to smooth variation in the congestion degree by moving the vehicle from a predetermined region of a high congestion degree to a predetermined region of a low congestion degree. In addition, it is possible to manage the smoothing of the congestion degree for every predetermined region based on the charging fee.

Also, the charging fee calculation device 1 may be configured to output the charging fee to any device other than the vehicle or the charging facility.

### (Third embodiment)

The charging fee may be configured to include a first charging fee to be applied when charging is performed up to a charge amount necessary to move to the outside of the predetermined region and a second charging fee to be applied when charging exceeding the charge amount is performed. At this time, the charging fee calculation device 1 may be configured to set the first charging fee to a pre-acquired value, set the second charging fee to a value calculated based on the power demand amount/charging fee relationship data and the surplus power amount, and distribute the first charging fee and the second charging fee to the vehicle or the charging facility. Also, the first charging fee, for example, is acquired via the communication network or read from the storage unit 12.

According to this process, for example, in the charging facility, an amount of payment money for power sale is calculated according to the first charging fee until it is determined that charging has been performed up to a charge amount necessary to move outside of a predetermined region by reading a charge power amount of a current vehicle, and an amount of payment money for power sale is calculated according to the second charging fee for more charging. If the second charging fee is set to be higher than the first charging fee, management is possible so that an environment for causing a vehicle driver to actively charge the vehicle is formed until the charge amount accumulated in a storage battery within the vehicle reaches an absolute power amount (until the vehicle is charged by a charge amount necessary to move to the outside of the predetermined region). Thereby, the second charging fee can be expected to decrease due to the demand of charging having reached the absolute power demand amount.

### (Fourth embodiment)

The charging fee calculation device 1 may be configured to change the calculation of the charging fee and the cycle of the output. At this time, the calculation of the charging fee and the cycle of the output are appropriately set for the purpose of avoiding traffic disorder. For example, when a plurality of different charging fees are output during movement, the vehicle driver is considered to be moving between regions for the purpose of charging in a region in which charging is cheap due to a change in the charging fee, thus causing disorder in traffic. Accordingly, for example, a process of acquiring information about the presence/absence of movement from the vehicle, detecting the movement of the vehicle, and outputting one charging fee in one movement, or the like may be configured to be performed.

Although the charging fee calculation device of the present invention has been described above, it is possible to manage smoothing of a congestion degree of vehicles for every predetermined region according to a charging fee according to the above-described process.

The above-described charging fee calculation device internally includes a computer system. The steps of each of the above-described processes are stored in a program format on a computer-readable recording medium, and the above-described processes are executed by causing a computer to read and execute the program. Here, the computer-readable recording medium refers to a magnetic disk, a magneto-optical disc, a compact disc-read only memory (CD-ROM), a digital versatile disc (DVD)-ROM, a semiconductor memory, or the like. The computer program may be configured to be distributed to a computer via a communication circuit and executed by the computer receiving the distribution.

In addition, the above-described program may be a program for implementing some of the above-described functions.

The above-described program may also be a program capable of implementing the above-described functions in combination with a program already recorded on the computer system, that is, a so-called differential file (differential program).

### INDUSTRIAL APPLICABILITY

The present invention is widely applicable to a charging fee calculation device, a charging fee calculation method, and its program for power with which a vehicle or the like is charged, and enables smoothing of a congestion degree of vehicles for every predetermined region to be managed according to a charging fee.

### DESCRIPTION OF THE REFERENCE SYMBOLS

- 1: Charging fee calculation device
- 11: Congestion degree input unit
- 12: Storage unit
- 13: Absolute power demand amount calculation unit
- 14: Permissible power demand amount input unit
- 15: Surplus power calculation unit
- 16: Charging fee calculation unit
- 17: Charging fee output unit

## Claims

1. A charging fee calculation device comprising:
a congestion degree input unit configured to input a pre-calculated congestion degree of vehicles within a predetermined region at a specified time;
an absolute power demand amount calculation unit configured to calculate an absolute power demand amount at the specified time from the input congestion degree based on pre-calculated congestion degree/absolute power demand amount relationship data representing a relationship between the congestion degree of vehicles within the predetermined region and the absolute power demand amount which is a sum of charge amounts necessary for the vehicles to move outside of the predetermined region;
a permissible power demand amount input unit configured to input a permissible power demand amount in which supply by a power generation facility is possible within the predetermined region at the specified time;
a surplus power calculation unit configured to calculate a surplus power amount representing a difference between the permissible power demand amount and the absolute power demand amount; and
a charging fee calculation unit configured to calculate a charging fee based on power demand amount/charging fee relationship data representing a relationship between a power demand amount and a charging fee per unit amount of power and the calculated surplus power amount.

2. The charging fee calculation device according to claim 1,
wherein the charging fee includes a first charging fee to be applied when charging is performed up to a charge amount necessary to move to the outside of the predetermined region and a second charging fee to be applied when charging exceeding the charge amount is performed, and
wherein the charging fee calculation unit sets the first charging fee to a pre-acquired value and sets the second charging fee to a value calculated based on the power demand amount/charging fee relationship data and the surplus power amount.

3. The charging fee calculation device according to claim 2, comprising:
a charging fee output unit configured to output the first charging fee and the second charging fee.

4. The charging fee calculation device according to claim 3, wherein the charging fee output unit distributes the first charging fee and the second charging fee using a communication network.

5. The charging fee calculation device according to any one of claims 1 to 4, comprising:
an absolute power amount calculation unit configured to calculate an absolute power amount representing a power amount necessary to move to the outside of the predetermined region based on a distance from a position of the vehicle to the outside of the predetermined region and a traveling distance of the vehicle per unit power consumption amount.

6. The charging fee calculation device according to any one of claims 1 to 4, comprising:
an absolute power amount calculation unit configured to calculate an absolute power amount representing a power amount necessary to move to the outside of the predetermined region based on a distance from a position of the vehicle to a charging facility closest to the outside of the predetermined region and a traveling distance of the vehicle per unit power consumption amount.

7. A charging fee calculation method for use in a charging fee calculation device, the charging fee calculation method comprising:
inputting, by a congestion degree input unit, a pre-calculated congestion degree of vehicles within a predetermined region at a specified time;
calculating, by an absolute power demand amount calculation unit, an absolute power demand amount at the specified time from the input congestion degree based on pre-calculated congestion degree/absolute power demand amount relationship data representing a relationship between the congestion degree of vehicles within the predetermined region and the absolute power demand amount which is a sum of charge amounts necessary for the vehicles to move outside of the predetermined region;
inputting, by a permissible power demand amount input unit, a permissible power demand amount in which supply by a power generation facility is possible within the predetermined region at the specified time;
calculating, by a surplus power calculation unit, a surplus power amount representing a difference between the permissible power demand amount and the absolute power demand amount; and
calculating, by a charging fee calculation unit, a charging fee based on power demand amount/charging fee relationship data representing a relationship between a power demand amount and a charging fee per unit amount of power and the calculated surplus power amount.

8. A program for causing a computer of a charging fee calculation device to function as:
a congestion degree input means configured to input a pre-calculated congestion degree of vehicles within a predetermined region at a specified time;
an absolute power demand amount calculation means configured to calculate an absolute power demand amount at the specified time from the input congestion degree based on pre-calculated congestion degree/absolute power demand amount relationship data representing a relationship between the congestion degree of vehicles within the predetermined region and the absolute power demand amount which is a sum of charge amounts necessary for the vehicles to move outside of the predetermined region;
a permissible power demand amount input means configured to input a permissible power demand amount in which supply by a power generation facility is possible within the predetermined region at the specified time;
a surplus power calculation means configured to calculate a surplus power amount representing a difference between the permissible power demand amount and the absolute power demand amount; and
a charging fee calculation means configured to calculate a charging fee based on power demand amount/charging fee relationship data representing a relationship between a power demand amount and a charging fee per unit amount of power and the calculated surplus power amount.
